Europäisches Patentamt

European Patent Office

Office européen des brevets

(19)

(11) Veröffentlichungsnummer: **0 271 046 B1**

# (12) EUROPÄISCHE PATENTSCHRIFT

(45) Veröffentlichungstag der Patentschrift: **04.03.92**

(51) Int. Cl.⁵: **B65G 1/02**, B65D 90/24

(21) Anmeldenummer: **87118074.1**

(22) Anmeldetag: **07.12.87**

(54) **Lager mit Auffangwanne für Flüssigkeit.**

(30) Priorität: **08.12.86 DE 8632864 U**
**27.03.87 DE 8704568 U**

(43) Veröffentlichungstag der Anmeldung:
**15.06.88 Patentblatt 88/24**

(45) Bekanntmachung des Hinweises auf die
Patenterteilung:
**04.03.92 Patentblatt 92/10**

(84) Benannte Vertragsstaaten:
**AT BE CH DE FR GB IT LI LU NL SE**

(56) Entgegenhaltungen:
**CH-A- 626 592**
**DE-A- 2 258 004**
**DE-A- 3 405 265**
**DE-U- 8 535 954**
**US-A- 3 802 574**

(73) Patentinhaber: **HOFFMANN INDUSTRIEBAU GMBH**
**Triftenstrasse 115**
**W-4937 Lage/Lippe(DE)**

(72) Erfinder: **Becher, Dietmar, Dipl.-Ing.**
**Alter Schulweg 17a**
**W-4937 Lage(DE)**

(74) Vertreter: **TER MEER - MÜLLER - STEINMEISTER & PARTNER**
**Artur-Ladebeck-Strasse 51**
**W-4800 Bielefeld 1(DE)**

## Beschreibung

Die Erfindung betrifft ein Lager mit wenigstens einer Auffangwanne, die beispielsweise zum Auffangen von aus eingelagerten Flüssigkeitsbehältern auslaufender Leckflüssigkeit dient.

Aus dem DE-U-85 35 954 ist ein Regallager in Form eines Containers bekannt, das als Faßlager für wassergefährdende Flüssigkeiten eingesetzt wird. Sofern eines der eingelagerten Fässer ein Leck aufweist, wird die austretende Flüssigkeit in einer am Boden des Containers gebildeten Auffangwanne gesammelt, so daß eine Verunreinigung von Oberflächengewässern oder des Grundwassers verhindert wird.

Eine Lagerfläche zum Abstellen der Fässer wird durch auf die Auffangwanne aufgelegte Gitterroste gebildet. Eine in halber Höhe des Containers angebrachte zweite Lagerebene wird ebenfalls durch Gitterroste gebildet, so daß die Flüssigkeit aus in der zweiten Lagerebene eingelagerten Fässern ggf. durch die Gitterroste in die Auffangwanne tropfen kann. Der Container weist die üblichen Norm-Maße eines See- oder Binnencontainers auf, ist jedoch an den Längsseiten offen, so daß sich das Lagergut beispielsweise mit Hilfe eines Gabelstaplers bequem einlagern und entnehmen läßt. Die nötige statische Stabilität des transportfähigen und stapelfähigen Containers wird durch eine fachwerkartige Rahmenkonstruktion aus Stahlprofilen erreicht. Die Stirnflächen und die Dachfläche des Containers sind zumeist verkleidet, so daß ein gewisser Schutz gegen Witterungseinflüsse gegeben ist.

Die Auffangwanne wird bei diesem herkömmlichen Container unmittelbar durch die unteren Quer- und Längsstreben der Rahmenkonstruktion und ein unterseitig mit diesen Streben verschweißtes Bodenblech gebildet, das flach auf dem Untergrund aufliegt. Die Höhe und damit das Volumen der Auffangwanne ist daher durch die Höhe der unteren Quer- und Längsstreben begrenzt. Das Volumen der Auffangwanne reicht jedoch aus, wenigstens 10% der insgesamt eingelagerten Flüssigkeitsmenge aufzunehmen, und entspricht daher den einschlägigen Vorschriften für die Lagerung wassergefährdender Flüssigkeiten.

Das Problem, ein ausreichendes Auffangvolumen bereitzustellen, besteht nicht nur bei der Lagerung von Flüssigkeiten, sondern generell bei der Lagerung von wassergefährdenden Substanzen, insbesondere bei leicht brennbaren Chemikalien, da im Fall eines Brandes die Gefahr besteht, daß die Chemikalien mit dem zur Brandbekämpfung eingesetzten Löschwasser weggeschwemmt werden und erhebliche Umweltschäden verursachen. Da die Aufnahme größerer Löschwassermengen bei einer Lagerung in herkömmlichen Lagercontainern nicht möglich ist, werden Chemikalien bisher zumeist in Block- oder Regallagern in geeigneten Gebäuden gelagert. Diese Lagerungssysteme sind jedoch unter dem Gesichtspunkt der Brandbekämpfung unbefriedigend, da die Paletten in Blocklagern bzw. die Regalböden in Regallagern keine ausreichende Brandabschottung ermöglichen, so daß ein Brand sich relativ rasch ausbreiten kann. Ein weiterer Nachteil bei der Lagerung in Gebäuden besteht darin, daß Löschgeräte oftmals nicht schnell genug an den Einsatzort gebracht werden können und daß die Löscharbeiten durch einen unzureichenden Rauchabzug erheblich behindert werden. Zwar kann der Boden des Lagergebäudes so konstruiert sein, daß das mit Chemikalien verunreinigte Löschwasser nicht in das Grundwasser gelangt, doch besteht die Gefahr, daß sich in dem aus verschiedenen Abteilungen des Lagers zusammenfließenden Löschwasser verschiedenartige Chemikalien mischen und chemisch miteinander reagieren, so daß in unkontrollierbarer Weise neue, unter Umständen gefährliche Verbindungen entstehen.

Bei Paletten- oder Faß-Regallägern, die nicht als Container ausgebildet sind, ist eine aufwendige und teure Bodenwanne aus Beton mit entsprechender flüssigkeitsdichter Beschichtung erforderlich, um ein Einsickern von Leckflüssigkeit in den Boden zu verhindern. In manchen Fällen wird auch eine Blechwanne lose unter das Regal geschoben (CH-A-626 592). Diese Blechwanne kann jedoch leicht entfernt werden oder verrutschen, so daß herabtropfende Flüssigkeit nicht zuverlässig aufgefangen werden kann.

Der Erfindung liegt die Aufgabe zugrunde, ein Regallager zu schaffen, das es gestattet, auslaufende Leckflüssigkeit oder Löschwasser zuverlässiger aufzufangen, so daß die Gefahr einer Schädigung von Gewässern oder des Grundwassers bei der Lagerung wassergefährdender Stoffe verringert wird.

Diese Aufgabe wird erfindungsgemäß mit den in Ansprüchen 1 und 6 angegebenen Merkmalen gelöst.

Bei dem erfindungsgemäßen Lager werden auch die Lagerebenen, die in Abstand über dem Boden angeordnet sind, unmittelbar durch Auffangwannen gebildet, die jeweils durch einen Gitterrost abgedeckt sind. Diese Konstruktion hat den Vorteil, daß der Abstand zwischen den Paletten mit den eingelagerten Flüssigkeitsbehältern und den Auffangwannen auf ein Minimum reduziert wird, so daß herabtropfende Flüssigkeit zuverlässig aufgefangen wird. Darüber hinaus wird das Gesamt-Auffangvolumen beträchtlich erhöht, ohne daß das nutzbare Lagervolumen durch die zusätzlichen Auffangwannen nennenswert verringert wird. Weiterhin wird eine Vermischung der Leckflüssigkeit oder des Löschwassers aus verschiedenen Lagerebenen verhindert und somit die Gefahr unkontrollierbarer chemischer Reaktionen vermindert. Bei den in Abstand oberhalb des Bodens angeordneten Auffangwannen wird zudem eine ausreichende Unterlüftung gewährleistet, so daß die Gefahr des Durchrostens verringert ist.

Vorteilhafte Ausgestaltungen und Weiterbildungen der Erfindung sind in den Unteransprüchen angegeben.

Eine ausreichende Tragfähigkeit der Bodenbleche der Auffangwannen im Hinblick auf das u.U. sehr hohe Gewicht der Leckflüssigkeit oder des Löschwassers läßt sich dadurch erreichen, daß das Bodenblech über Zugbänder mit in die Auffangwanne eingeschweißten Trägern verbunden ist, die zugleich den Gitterrost abstützen.

Darüber hinaus bietet sich die vorteilhafte Möglichkeit, das Bodenblech der Auffangwanne derart geneigt anzuordnen, daß im Fall eines Lecks die Flüssigkeit an einer Ecke oder einer Längskante der Auffangwanne zusammenläuft, so daß das Leck frühzeitig erkannt werden kann. In diesem Fall kann an der tiefsten Stelle der Auffangwanne auch ein bekannter Flüssigkeitsdetektor zur Erzeugung eines Warnsignals angebracht werden.

Wenn das Lager entsprechend der DE-U 85 35 954 als Container ausgebildet ist, können die aus gekantetem Blech bestehenden Auffangwannen mit ihren seitlichen Außenflächen in die Rahmenkonstruktion des Containers eingeschweißt sein.

Wahlweise ist es auch möglich, die Auffangwannen mit einem nach außen abgewinkelten Rand lösbar in die Rahmenkonstruktion einzuhängen.

Da die Auffangwannen selbständige Konstruktionsteile sind, die rationell in großen Stückzahlen vorgefertigt werden können, lassen sich zu geringen Kosten auch herkömmliche Container oder Palettenregale mit solchen Auffangwannen nachrüsten.

Im folgenden werden bevorzugte Ausführungsbeispiele der Erfindung anhand der Zeichnungen näher erläutert.

Es zeigen:

Fig. 1      eine perspektivische Ansicht eines Regalcontainers als Teil eines Chemikalienlagers;

Fig. 2      einen Schnitt durch eine Auffangwanne eines erfindungsgemäßen Containers;

Fig. 3 und 4      Schnitte durch Auffangwannen gemäß abgewandelten Ausführungsbeispielen der Erfindung; und

Fig. 5      einen senkrechten Schnitt durch ein erfindungsgemäßes Palettenregal;

Fig. 6      eine perspektivische Ansicht einer Auffangwanne des Palettenregals;

Fig. 7      einen Schnitt durch ein Palettenregal gemäß einer anderen Ausführungsform der Erfindung; und

Fig. 8      einen Schnitt durch ein aus zwei getrennten Einheiten zusammengesetztes Palettenregal.

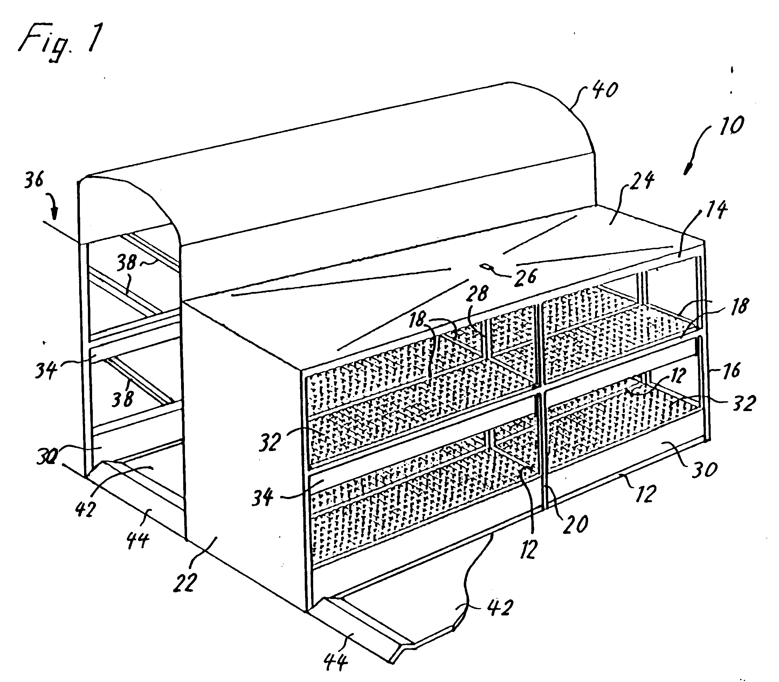

Ein Transport- und Lagercontainer 10 weist gemäß Figur 1 eine offene, fachwerkartige Rahmenkonstruktion aus Stahlprofilen auf. Untere und obere waagerechte Streben 12,14 und senkrechte Kantenpfosten 16 bilden die Kanten des Containers, und das Innere des Containers wird durch waagerechte Längs- und Querstreben 18 und senkrechte Stützpfosten 20 in mehrere Zellen unterteilt. An den Stirnseiten und an der Oberseite ist der Container 10 durch Seitenbleche 22 bzw. eine Decke 24 verkleidet.

Die Decke 24 weist zur Mitte hin ein gewisses Gefälle auf, so daß das Regenwasser durch eine Öffnung 26 in der Mitte der Behälterdecke und einen hohlen Mittelpfosten 28 der Rahmenkonstruktion ablaufen kann.

Die untere Lagerebene des Containers 10 wird durch in die Rahmenkonstruktion eingeschweißte Auffangwannen 30 mit aufgelegten Gitterrosten 32 gebildet. Die obere Lagerebene wird ebenfalls durch mit Gitterrosten 32 versehene Auffangwannen 34 gebildet, die lösbar in die Längs-und Querstreben der Rahmenkonstruktion eingehängt sind.

In Figur 1 ist ferner ein Teil eines weiteren Transport-und Lagercontainers 36 dargestellt, bei dem die Auffangwanner in der Ebene ihres oberen Randes mit in Querrichtung des Containers verlaufenden Führungsschienen 38 zur Abstützung von Paletten versehen sind. Der Abstand der Führungsschienen ist entsprechend unterschiedlichen Palettenbreiten verstellbar. Die Führungsschienen 38 sind durch eine PVC-Lackierung gegen Korrosion geschützt. Die Lagerebenen des Containers 36 sind daher besonders für die Lagerung sehr agressiver Substanzen geeignet.

Ein zwischen den Containern 10 und 36 gebildeter Verkehrsweg ist durch ein Überdachungselement 40 abgedeckt. Der Boden des Verkehrswegs ist durch eine flüssigkeitsdicht mit den Containern verbundene Stahlplatte 42 abgedeckt, die in Höhe der Stirnseiten des Containers durch dachförmige, überfahrbare Schwellen 44 abgeschlossen ist. Eine entsprechende Stahlplatte mit Schwelle ist am vorderen Rand des Containers 10 in einer Bruchdarstellung angedeutet. Durch die in den Gängen zwischen den Containern verlegten Stahlplatten mit Schwellen werden zusätzliche großvolumige Rückhaltebecken gebildet, so daß im Fall eines Brandes insgesamt eine sehr große Löschwassermenge zurückgehalten werden kann. Unter den Streben 14,18 der Rahmenkonstruktion sind nicht gezeigte Rohre einer Sprinkler-Anlage für eine sofortige Brandbekämpfung verlegt. Im Fall eines Brandes wird nur die Sprinkler-Anlage für die betroffene Zelle des Containers eingeschaltet, und das Löschwasser wird durch die Auffangwanne dieser Zelle aufgefangen, so daß der Wasserschaden begrenzt wird. Überlaufendes oder an den offenen Längsseiten des Containers herausspritzendes Löschwasser wird in den zwischen den Containern gebildeten Rückhaltebecken aufgefangen. An den senkrechten Pfosten 20,28 der Rahmenkonstruktion können wahlweise zusätzliche Blech-Trennwände angeschweißt werden, so daß eine noch feinere Aufteilung des Lagers in kleine Brandabschnitte erreicht wird.

Die durch die Bleche 42 und die Schwellen 44 gebildeten Rückhaltebecken haben zudem den Vorteil, daß bei Unfällen während des Ein- oder Auslagerns von wassergefährdenden Flüssigkeiten das Einsickern der Flüssigkeit in den Boden außerhalb des Containers verhindert wird.

Die Auffangwannen 30,34 sind aus gekantetem Blech mit einer Blechstärke von wenigstens 3mm hergestellt und bilden selbsttragende Konstruktionselemente, die die Rahmenkonstruktion des Containers zusätzlich versteifen.

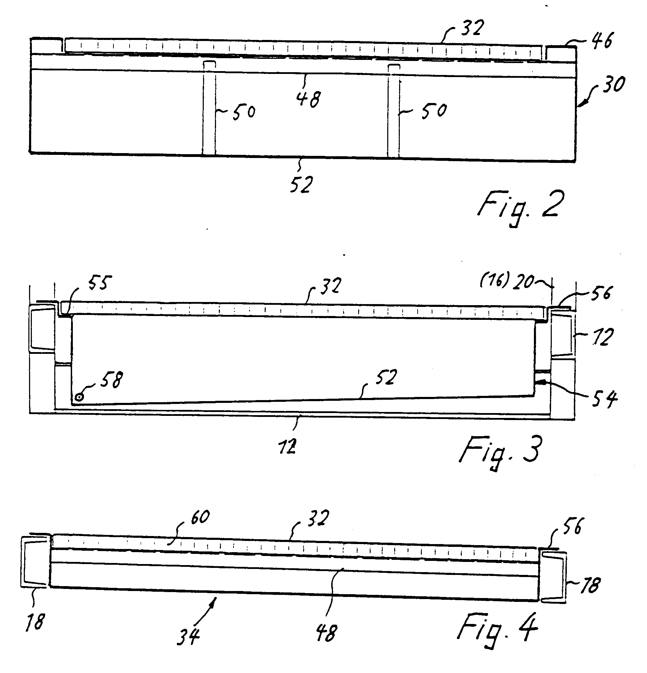

In Figuren 2 bis 4 sind unterschiedliche Bauformen von Auffangwannen im Querschnitt dargestellt.

Die Auffangwanne 30 gemäß Figur 2 weist glatte seitliche Außenflächen und einen nach innen gekanteten Rand 46 auf, der das Gitterrost 32 einfaßt. Das Gitterrost liegt auf in Querrichtung des Containers verlaufenden, mit den Wänden der Auffangwanne verschweißten Trägern 48 auf. Das Bodenblech 52 der Auffangwanne ist über Zugbänder 50 mit den Trägern 48 verbunden, so daß sich der Boden der Auffangwanne auch bei Aufnahme einer großen Flüssigkeitsmenge nicht durchbiegt. Die Auffangwanne 30 wird mit ihren glatten Außenflächen in die senkrechten Pfosten 16, 20 der Rahmenkonstruktion des Containers eingeschweißt.

Figur 3 zeigt eine Auffangwanne 54, die an ihrem oberen Rand eine Stufe 55 zur Aufnahme des Gitterrostes 32 und einen nach außen vorstehenden Flansch 56 aufweist, mit dem sich die Auffangwanne lösbar in die Rahmenkonstruktion des Containers einhängen läßt. Im gezeigten Beispiel sind die längs verlaufenden unteren Streben 12 der Rahmenkonstruktion etwas nach oben versetzt, so daß die Auffangwanne 54 mit relativ großem Auffangvolumen in der unteren Lagerebene eingesetzt werden kann. Die quer verlaufenden Streben 12 liegen dagegen in der Ebene der unteren Enden der senkrechten Pfosten 20 bzw. 16, so daß eine stabile Abstützung des Containes auf einer relativ großen Standfläche gewährleistet ist.

Der Boden 52 der Auffangwanne 54 ist zu einem der Längsränder des Containers hin geneigt, so daß Leckflüssigkeit am entsprechenden Längsrand der Auffangwanne zusammenläuft. Ein an der tiefsten Stelle der Auffangwanne verlegtes Detektor-Kabel 58 liefert ein Warnsignal, sobald es mit Flüssigkeit in Berührung kommt, und gestattet somit eine frühzeitige Erkennung von Lecks.

Bei der in Figur 4 gezeigten Auffangwanne 34 liegt das Gitterrost 32 auf eingeschweißten Trägern 48 auf. Das Gitterrost kann daher so verlegt werden, so daß seine tragenden Rippen 60 in Längsrichtung des Containers verlaufen.

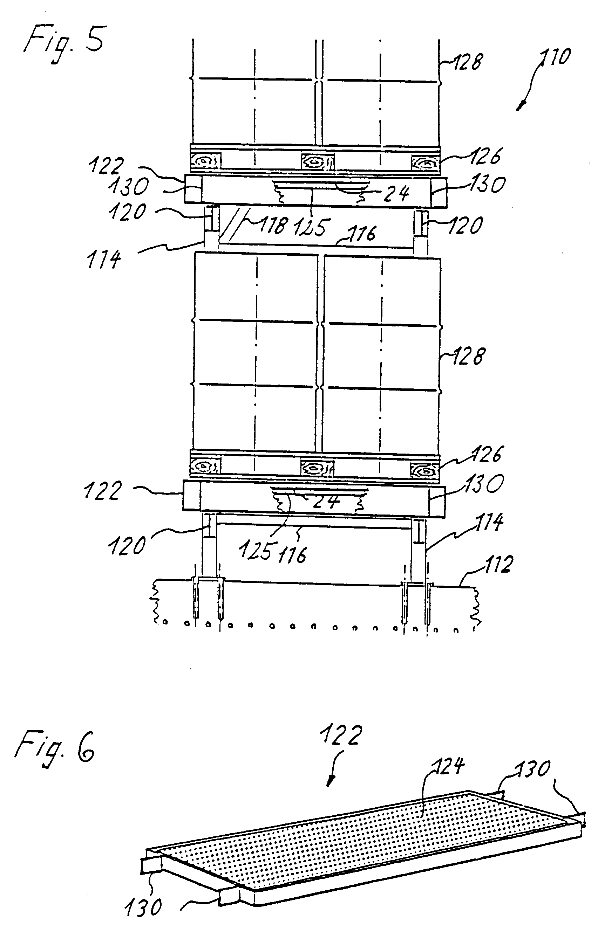

Gemäß Figur 5 weist ein Palettenregal 110 mit dem Boden 112 verschraubte senkrechte Stützen 114 auf, die durch waagerechte und diagonale Streben 116,118 sowie durch senkrecht zur Zeichenebene verlaufende Träger 120 miteinander verbunden sind. In einer oder mehreren Lagerebenen ist eine flache Auffangwanne 122 aus gekantetem Blech oder aus Profilen mit Bodenblech vorgesehen, die sich auf den Trägern 120 abstützt. Der umlaufende Rand der Auffangwanne 122 wird entweder durch hochgekantetes Blech oder durch Profile gebildet, die zugleich ein Auflager und eine Einfassung für ein Gitterrost 124 bilden, das die Auffangwannen 122 abdeckt und eine Stellfläche für die Paletten 126 bildet, die im gezeigten Beispiel mit Fässern 128 beladen sind. Die Auflage für das Gitterrost kann auch aus in der Wanne befestigten Tragprofilen 125 bestehen, die in Fig. 5, 7 und 8 angedeutet sind.

Wie in Fig. 6 zu erkennen ist, ist die Auffangwanne 122 an den Schmalseiten mit vier nach außen vorspringenden Arretierungsblechen 130 versehen, die von innen an den senkrechten Stützen 114 anliegen. Bei der Ausführungsform gemäß Fig. 5 und 6 sind die Auffangwannen 122 lose auf die Träger 120 aufgelegt, so daß sie je nach Bedarf in den Bereichen des Lagers eingesetzt werden können, in denen wassergefährdende Flüssigkeiten eingelagert werden. Durch die Arretierungsbleche 130 werden die Auffangwannen zuverlässig in Position gehalten.

Der durch gekantetes Blech oder Profile gebildete Rahmen der Auffangwannen 122 weist eine hohe mechanische Stabilität auf, so daß durch die Auffangwanne ein großes Gewicht aufgenommen werden kann. Um eine noch höhere Tragkraft zu erreichen, können im Wanneninneren Verstärkungsprofile vorgesehen werden.

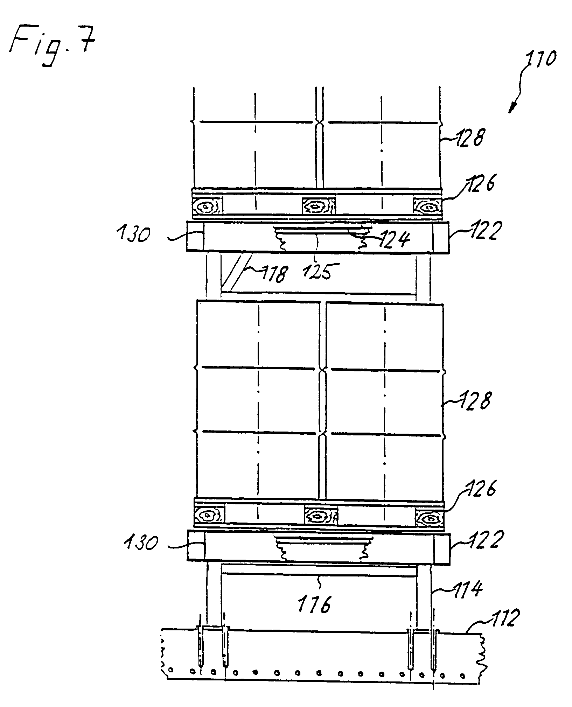

Bei der in Fig. 7 gezeigten Ausführungsform werden die zur Abstützung der Paletten 126 dienenden Träger unmittelbar durch die Auffangwannen 122 gebildet, so daß auf die Träger 120 ganz verzichtet werden kann. Die Auffangwannen 122 sind in diesem Falle mit Anschlußstücken 130 versehen, die mit den senkrechten Stützen 114 verschraubt, verschweißt oder in sonstiger Weise starr verbunden sind.

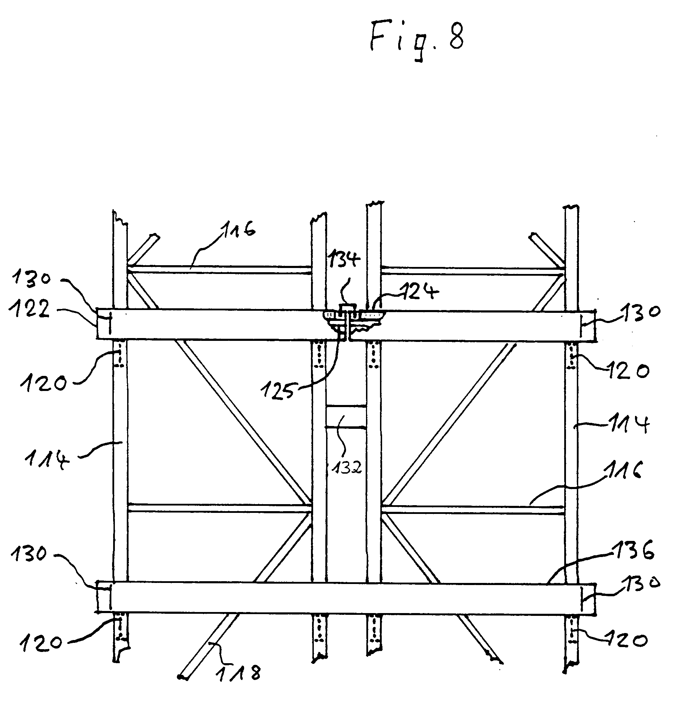

Wie in Fig. 8 angedeutet ist, können zwei getrennte Regaleinheiten zu einem doppelseitig bedienbaren Palettenregal entlang ihren Längskanten verbunden werden. Diese Lösung führt zu einer Einsparung von Stellfläche. Die auf der selben Lagerebene liegenden Auffangwannen 122 können an ihren benachbarten Rändern durch Tropfbleche 134 mit nach unten offenem U-Profil überbrückt werden, so daß auslaufende Flüssigkeiten nicht zwischen den Auffangwannen hindurch herunterfließen können. Anstelle der beiden Auffangwannen 122 kann auch eine über beide Regalhälften reichende Auffangwanne 136 eingesetzt werden, die auch mit zwei oder mehreren Arretierungsblechen 130 an den senkrechten Stützen 14 in Position gehalten wird.

Auch diese Auffangwannen 136 können so ausgebildet sein, daß sie als tragendes Element verwendet werden, so daß die Träger 120 entfallen können. In diesem Falle wird die Auffangwanne 136 direkt mit den Stützen 114 verschraubt, verschweißt oder in sonstiger Weise starr verbunden.

**Patentansprüche**

1. Lager in der Form eines Palettenregals mit senkrechten Stützen (114) und mit die Stützen verbindenden waagerechten Trägern (120,122), das mehrere Lagerebenen zur Aufnahme der einzelnen Paletten (126) aufweist, und zumindest in der untersten Lagerebene mit einer Auffangwanne (122) versehen ist, die durch einen Gitterrost (124) zur Bildung einer Stellfläche für die Paletten abgedeckt ist und die die Paletten dieser Lagerebene auf ganzer Fläche unterfängt, dadurch **gekennzeichnet,** daß die in Abstand über dem Boden angeordneten Lagerebenen unmittelbar durch Auffangwannen (122) gebildet werden, die jeweils durch einen Gitterrost (124) abgedeckt sind und auf den Trägern (120) aufliegen oder selbst diese Träger bilden.

2. Lager nach Anspruch 1, dadurch **gekennzeichnet,** daß die Auffangwannen (122) lose auf den Trägern (120) aufliegen und mit nach außen vorspringenden Arretierungsstücken (130) versehen sind, die von innen oder von außen an den senkrechten Stützen (114) anliegen.

3. Lager nach einem der Anspruch 1 oder 2, dadurch **gekennzeichnet,** daß die Auffangwannen (122) aus gekantetem Blech bestehen.

4. Lager nach einem der Ansprüche 1 bis 3, dadurch **gekennzeichnet,** daß zwei getrennte Palettenregale durch Verbindungsstücke (132) entlang jeweils einer Längsseite zu einem doppelseitig bedienbaren Palettenregal verbunden sind und daß die Ränder benachbarter Auffangwannen (122) durch im Querschnitt U-förmige, nach unten offene Tropfbleche (134) abgedeckt sind.

5. Lager nach einem der Ansprüche 1 bis 3, dadurch **gekennzeichnet,** daß zwei getrennte Palettenregale durch Verbindungsstücke (132) entlang jeweils einer Längsseite zu einem doppelseitig bedienbaren Palettenregal verbunden sind und daß in einer Lagerebene über beide Palettenregale hinweg eine zusammenhängende Auffangwanne (136) angeordnet ist.

6. Lager in der Form eines Containers (10) mit einer aus Längs- und Querstreben (12,14,18) und senkrechten Stützen (16,20,28) gebildeten, an den Längsseiten offenen tragenden Rahmenkonstruktion, der wenigstens zwei Lagerebenen und zumindest in der untersten Lagerebene eine Auffangwanne (30) aufweist, die in Höhe ihres oberen Randes mit einem Gitterrost (32) zur Bildung der Stellfläche dieser Lagerebene versehen ist, dadurch **gekennzeichnet,** daß auch die obere Lagerebene durch eine Auffangwanne (34;54) mit Gitterrost gebildet wird und daß die Auffangwannen (30;34;54) unabhängig von der Rahmenkostruktion aus gekantetem Blech gebildete selbsttragende Konstruktionselemente sind.

7. Lager nach Anspruch 6, dadurch **gekennzeichnet,** daß die Auffangwannen (30) mit ihren seitlichen Außenflächen in die Rahmenkonstruktion des Containers (10) eingeschweißt sind.

8. Lager nach Anspruch 6 oder 7, **gekennzeichnet** durch unter den waagerechten Streben (14,18) der Rahmenkonstruktion verlegte Sprinkler-Rohre.

9. Lager nach einem der vorstehenden Ansprüche, dadurch **gekennzeichnet,** daß die Auffangwannen (34:54) mit einem nach außen abgewinkelten Rand (56) lösbar in die Rahmenkonstruktion eingehängt sind.

10. Lager nach einem der vorstehenden Ansprüche, **gekennzeichnet** durch in die Auffangwannen (30;34;122) eingeschweißte Träger (48;125) zur Abstützung der Gitterroste (32;124).

**11.** Lager nach Anspruch 10, dadurch **gekennzeichnet,** daß die Träger (48) der Auffangwanne über Zugbänder (50) mit dem Bodenblech (52) der Auffangwanne verbunden sind.

**12.** Lager nach einem der vorstehenden Ansprüche, dadurch **gekennzeichnet,** daß die Auffangwanne (54) im Bereich ihres oberen Randes eine Abstufung (55) zur Abstützung des Gitterrostes (32) aufweist.

**13.** Lager nach einem der vorstehenden Ansprüche, dadurch **gekennzeichnet,** daß der Boden (52) der Auffangwanne (54;122) zu einer Ecke oder einer Kante der Auffangwanne hin geneigt ist.

**14.** Lager nach einem der vorstehenden Ansprüche, **gekennzeichnet** durch einen an der tiefsten Stelle der Auffangwanne (30;34;54;62;122) angeordneten Flüssigkeitsmelder.

**Claims**

**1.** Storage container in the form of a pallet stand with vertical supports (114) and horizontal carriers (120, 122) connecting with the supports, which comprises a plurality of storage levels for accommodating the individual pallets (126) and is provided at least at the lowermost storage level with a collecting vessel (122) which is covered by a grate (124) to form a deposit surface for the pallets and collects beneath the pallets on this storage level over the entire surface, characterised in that the storage levels disposed at a distance over the base are formed directly by collecting vessels (122) which are in each case covered by a grate (124) and rest upon the carriers (120) or themselves form these carriers.

**2.** Storage container according to Claim 1, characterised in that the collecting vessels (122) lie movably on the carriers (120) and are provided with outwardly projecting detent members (130) which abut from the interior or from the exterior on the vertical supports (114).

**3.** Storage container according to either of Claims 1 or 2, characterised in that the collecting vessels (122) consist of folded sheet.

**4.** Storage container according to any one of Claims 1 to 3, characterised in that two separate pallet stands are connected by means of connecting pieces (132) along one longitudinal side in each case to form a pallet stand which can be used from both sides; and in that the edges of adjacent collecting vessels (122) are covered by drip pans (134) which are U-shaped in cross-section and open at the bottom.

**5.** Storage container according to any one of Claims 1 to 3, characterised in that two separate pallet stands are connected by means of connecting pieces (132) along one longitudinal side in each case to form a pallet stand which can be used from both sides; and in that a continuous collecting vessel (136) is disposed at one storage level projecting over both pallet stands.

**6.** Storage container in the form of a container (10) having a bearing frame construction which is formed by longitudinal and transverse struts (12, 14, 18) and vertical supports (16, 20, 28), is open at the longitudinal sides, and comprises at least two storage levels and at least in the lowermost storage level one collecting vessel (30) which at the level of the upper edge thereof is provided with a grate (32) in order to form the depositing surface of this storage level, characterised in that the upper storage level is also formed by a collecting vessel (34;54) with a grate; and in that the collecting vessels (30;34;54) are self-supporting structural components formed from folded sheet independently of the frame structure.

**7.** Storage container according to Claim 6, characterised in that the collecting vessels (30) are welded with their lateral outer surfaces into the frame structure of the container (10).

**8.** Storage container according to Claim 6 or 7, characterised by sprinkler hoses disposed below the horizontal struts (14, 18) of the frame structure.

**9.** Storage container according to any one of the preceding claims, characterised in that the collecting vessels (34;54) are suspended detachably in the frame structure by means of an outwardly angled edge (56).

**10.** Storage container according to any one of the preceding claims, characterised by carriers (48;125) which are welded into the collecting vessels (30;34;122) in order to support the grates (32;124).

**11.** Storage container according to Claim 10, characterised in that the carriers (48) of the collecting vessel are connected via tie rods (50) to the base sheet (52) of the collector vessel.

**12.** Storage container according to any one of the preceding claims, characterised in that the collecting vessel (54) comprises in the vicinity of its upper edge a stepped portion (55) for supporting the grate (32).

**13.** Storage container according to any one of the preceding claims, characterised in that the base (52) of the collecting vessel (54;122) is inclined towards one corner or one edge of the collecting vessel.

**14.** Storage container according to any one of the preceding claims, characterised by a fluid indicator disposed at the lowest point of the collecting vessel (30;34;54;62;122).

**Revendications**

**1.** Dispositif de stockage sous la forme d'un rayonnage de palettes, équipé de montants verticaux (114) et de poutres horizontales (120,122) réunissant les montants, qui présente plusieurs plans de stockage pour la réception des différentes palettes (126), et qui est muni,au moins dans le plan de stockage inférieur,d'un bac collecteur (122), qui est recouvert d'une grille (124) en vue de la formation d'une surface d'appui pour les palettes et qui supporte les palettes de ce plan de stockage sur toute la surface, caractérisé en ce que les plans de stockage disposés espacés au-dessus du sol sont constitués par des bacs collecteurs (122), qui sont recouverts d'une grille (124) et reposent sur les poutres (120) ou constituent eux-mêmes ces poutres .

**2.** Dispositif de stockage selon la revendication 1, caractérisé en ce que les bacs collecteurs (122) reposent de façon lâche sur les poutres (120) et sont munis d'éléments d'arrêt (130) saillant vers l'extérieur, qui s'appliquent de l'intérieur ou de l'extérieur sur les montants verticaux (114).

**3.** Dispositif de stockage selon la revendication 1 ou 2, caractérisé en ce que les bacs collecteurs (122) sont en tôle pliée.

**4.** Dispositif de stockage selon l'une des revendications 1 à 3, caractérisé en ce que deux rayonnages de palettes distincts sont réunis par des éléments de liaison (132) le long d'un côté longitudinal en un rayonnage de palettes pouvant être desservi bilatéralement et en ce que les bords de bacs collecteurs adjacents (122) sont recouverts par des égouttoirs (134) ouverts vers le bas, en forme de U en coupe.

**5.** Dispositif de stockage selon l'une des revendications 1 à 3, caractérisé en ce que deux rayonnages de palettes distincts sont réunis par des éléments de liaison (132) le long d'un côté longitudinal en un rayonnage de palettes pouvant être desservi bilatéralement et en ce que, dans un plan de stockage, est disposé un bac collecteur commun (136) s'étendant sur les deux rayonnages de palettes.

**6.** Dispositif de stockage sous la forme d'un conteneur (10), équipé d'une structure de châssis porteuse ouverte sur les côtés longitudinaux, formée de poutres longitudinales et transversales (12,14,18) et de montants verticaux (16, 20,28), qui présente au moins deux plans de stockage et,au moins dans le plan de stockage inférieur,un bac collecteur (30), qui est pourvu à hauteur de son bord supérieur d'une grille (32) en vue de la formation de la surface d'appui de ce plan de stockage, caractérisé en ce qu'également le plan de stockage supérieur est formé par un bac collecteur (34;54) avec une grille et en ce que les bacs collecteurs (30;34;54) sont réalisés en éléments structuraux autoporteurs en tôle pliée , indépendants de la structure de châssis.

**7.** Dispositif de stockage selon la revendication 6, caractérisé en ce que les bacs collecteurs (30) sont soudés par leurs surfaces extérieures latérales à la structure de châssis du conteneur (10).

**8.** Dispositif de stockage selon la revendication 6 ou 7, caractérisé par des tubes de pulvérisation disposés audessous des poutres horizontales (14,18) de la structure de châssis.

**9.** Dispositif de stockage selon l'une des revendications précédentes, caractérisé en ce que les bacs collecteurs (34;54) sont suspendus de façon amovible dans la structure de châssis par un bord (56) replié vers l'extérieur.

**10.** Dispositif de stockage selon l'une des revendications précédentes, caractérisé par des poutres (48;125) soudées dans les bacs collecteurs (30;34;122) en vue du soutien des grilles (32;124).

**11.** Dispositif de stockage selon la revendication 10, caractérisé en ce que les poutres (48) des bacs collecteurs sont réunies par l'intermédiaire de tirants (50) à la tôle de fond (52) du bac collecteur.

12. Dispositif de stockage selon l'une des revendications précédentes, caractérisé en ce que le bac collecteur (54) présente, à proximité de son bord supérieur, un gradin (55) en vue du soutien de la grille (32).

13. Dispositif de stockage selon l'une des revendications précédentes, caractérisé en ce que le fond (52) du bac collecteur (54;122) est incliné en direction d'un coin ou un bord du bac collecteur.

14. Dispositif de stockage selon l'une des revendications précédentes, caractérisé par un dispositif de signalisation de liquide disposé au point le plus bas du bac collecteur (30;34;54;62;122).

*Fig. 1*

Fig. 2

Fig. 3

Fig. 4

*Fig. 5*

*Fig. 6*

Fig.7

Fig. 8